# EUROPÄISCHE PATENTSCHRIFT

(11) **EP 4 480 650 B1**
(45) Veröffentlichungstag und Bekanntmachung des Hinweises auf die Patenterteilung: **24.12.2025**
(21) Anmeldenummer: 24182660.1
(22) Anmeldetag: 17.06.2024
(51) Int. Cl.: B26B 25/00, B25F 5/00, A22B 5/16

(54) **FLEISCH-TRIMMER, KUPPLUNGSANORDNUNG HIERFÜR SOWIE VERWENDUNG DERSELBEN**
MEAT TRIMMER, COUPLING ASSEMBLY THEREFOR AND USE THEREOF
COUPE-BORDURES, ENSEMBLE D'ACCOUPLEMENT ASSOCIÉ ET UTILISATION ASSOCIÉE

(30) Priorität: 21.06.2023 DE 202023103440 U
(43) Veröffentlichungstag der Anmeldung: 25.12.2024
(73) Patentinhaber: Freund Maschinenfabrik GmbH & Co. KG, 33106 Paderborn (DE)
(72) Erfinder: Ewers, Christoph, 34439 Willebadessen (DE)
(74) Vertreter: Wickord, Wiro

(56) Entgegenhaltungen:
- EP-A1- 2 620 262
- EP-B1- 1 218 151
- DE-U1- 202010 005 399
- DE-U1- 202023 100 684

## Beschreibung

Die Erfindung betrifft eine Kupplungsanordnung an einem durch einen Antriebsstrang mit einer flexiblen Antriebswelle rotatorisch antreibbaren Handwerkzeug mit einer Einhand-Sicherheitsbedienabschaltung gemäß dem Oberbegriff des Patentanspruchs 1. Ferner betrifft die Erfindung die Verwendung einer erfindungsgemäßen Kupplungsanordnung in einem Fleisch-Trimmer als Handwerkzeug. Weiter betrifft die Erfindung einen Fleisch-Trimmer umfassend eine erfindungsgemäße Kupplungsanordnung.

Die DE 20 2010 005 399 U1 offenbart eine Kupplungsanordnung an einem durch einen Antriebsstrang mit einer flexiblen Antriebswelle rotatorisch antreibbaren Handwerkzeug mit einer Einhand-Sicherheitsbedienabschaltung, insbesondere einen Fleisch-Trimmer. Zwischen dem Abtriebsende des Antriebsstrangs und einem Zahnrad zum Antreiben des Handwerkzeugs ist hier eine Kupplung mit Steuerstift und mit einem Kupplungszapfen vorgesehen. Über ein Anlegen eines Bedienhebels erfolgt hierbei eine axiale Verschiebung des Steuerstifts in eine Kupplungsposition, in welcher der Antriebsstrang und das Zahnrad zum Antreiben des Handwerkzeugs über die Kupplung miteinander gekoppelt sind. Ein Loslassen des Bedienhebels führt zu einer axial rückwärtigen Verschiebung des Steuerstifts, sodass der Antriebsstrang und das Zahnrad voneinander entkoppelt sind. Auf diese Weise ist über den Bedienhebel eine Not-Abschaltung beziehungsweise Sicherheitsabschaltung zur Unfallvermeidung realisiert. Der Antriebsstrang verbleibt hier unabhängig von der Betätigung des Bedienhebels auf einer gleichbleibenden Position. Trotz eines Feststellers am Bedienhebel kann es hier vorkommen, dass das Handwerkzeug durch ein unbeabsichtigtes Anlegen des Bedienhebels gestartet wird, beispielsweise wenn das Handwerkzeug auf den Boden fällt.

Die DE 20 2023 100 684 U1 offenbart eine gattungsgemäße Kupplungsanordnung an einem durch einen Antriebsstrang mit einer flexiblen Antriebswelle rotatorisch antreibbaren Handwerkzeug mit einer Einhand-Sicherheitsbedienabschaltung, insbesondere einen Fleisch-Trimmer mit einem Bedienhebel zum Verschieben des Antriebsstrangs in eine Kupplungsposition, in welcher eine formschlüssige Verbindung mit einem das Handwerkzeug im Betrieb antreibenden Zahnrad und dem Antriebsstrang hergestellt ist beziehungsweise zum außer Eingriff verbringen des Antriebsstrangs und des Zahnrads. Über den Bedienhebel kann hier insofern das Handwerkzeug gestartet oder gestoppt werden. Es kann hier jedoch ebenfalls vorkommen, dass das Handwerkzeug durch ein unbeabsichtigtes Anlegen des Bedienhebels gestartet wird.

Aufgabe der vorliegenden Erfindung ist es daher, eine Kupplungsanordnung an einem rotatorisch angetriebenen Handwerkzeug, insbesondere einem Fleisch-Trimmer, anzugeben, die eine sichere, einhändige Betätigung zum Starten beziehungsweise Stoppen des Handwerkzeugs ermöglicht. Ferner wird die Aufgabe durch eine erfindungsgemäße Verwendung beziehungsweise einen erfindungsgemäßen Fleisch-Trimmer gelöst.

Zur Lösung der Aufgabe ist die Erfindung in Verbindung mit dem Oberbegriff des Patentanspruchs 1 dadurch gekennzeichnet, dass zum Antreiben des Handwerkzeugs der Bedienhebel und zusätzlich ein am Handgriff vorgesehenes Sicherungselement zu betätigen sind, wobei durch Betätigung des Bedienhebels direkt das Abtriebsende des Antriebsstrangs axial zum vorderen Ende hin in eine Kupplungsposition verschoben ist, in welcher eine formschlüssige Verbindung zwischen dem Zahnrad und dem Abtriebsende des Antriebsstrangs hergestellt ist, und wobei durch Betätigung des Sicherungselements eine Blockierstellung aufgelöst ist, in welcher das Sicherungselement ein axiales Vorschieben des Antriebsstrangs in die Kupplungsposition und damit das Betätigen des Bedienhebels blockiert.

Der besondere Vorteil der Erfindung besteht darin, dass eine zuverlässige Einhand-Sicherheitsbedienabschaltung für ein Handwerkzeug angegeben werden kann, welche über das Sicherungselement und den Bedienhebel als Betätigungselemente eine Sicherheitsabschaltung beziehungsweise Not-Abschaltung des Handwerkzeugs als auch eine Entnahme beziehungsweise ein Trennen des Handwerkzeugs von dem Antriebsstrang mit der flexiblen Antriebswelle ermöglicht.

In der Blockierstellung verhindert das Sicherungselement ein axiales Verschieben des Antriebsstrangs in die Kupplungsposition über den Bedienhebel. Eine unbeabsichtigte Inbetriebnahme des Handwerkzeugs durch ein Anlegen des Bedienhebels infolge eines Unfalls oder einer ungeschickten Bewegung eines Bedieners ist somit ausgeschlossen.

Zur Inbetriebnahme beziehungsweise zum Antreiben des Handwerkzeugs ist es erforderlich, sowohl den Bedienhebel als auch das Sicherungselement zu betätigen. Das Sicherungselement wird durch Betätigung aus der Blockierstellung in eine Freigabestellung verbracht, in welcher das Sicherungselement gegenüber dem Antriebsstrang außer Eingriff verbracht ist und somit ein axiales Vorschieben des Abtriebsendes des Antriebsstrangs in die Kupplungsposition ermöglicht ist. Es ist insofern vorgesehen, dass der Bedienhebel nicht ohne Betätigung des Sicherungselements betätigt werden kann.

Nach der Erfindung weist der Antriebsstrang einen radial in Bezug auf die flexible Antriebswelle hervorstehenden Mitnehmer auf und an dem Handgriff ist ein Sicherungshebel als Sicherungselement angelenkt, wobei der Sicherungshebel axial vor dem Mitnehmer des Antriebsstrangs angeordnet ist, sodass ein axiales Vorschieben des Antriebsstrangs in die Kupplungsposition blockiert ist. Der Sicherungshebel ist vorzugsweise über eine Hebelfeder in der Blockierstellung als Ruhestellung gehalten.

Nach einer Weiterbildung der Erfindung ist in der Gehäuseausnehmung eine axial zwischen dem Zahnrad und dem Abtriebsende des Antriebsstrangs aufgenommene Kupplungsfeder vorgesehen, welche das Abtriebsende des Antriebsstrangs in der Gehäuseausnehmung axial zum hinteren Ende hin in eine rückwärtige Auskupplungsposition als Ruheposition drückt, in welcher die formschlüssige Verbindung zwischen dem Antriebsstrang und dem Zahnrad aufgelöst ist. Vorteilhaft bildet die Kupplungsfeder somit ein Rückstellelement für den Bedienhebel, da ein Loslassen des Bedienhebels dazu führt, dass die Kupplungsfeder den Antriebsstrang in die Auskupplungsposition zurückdrückt, wodurch der mit dem Antriebsstrang in Eingriff stehende Bedienhebel entsprechend mitbewegt ist. Bei einem unbeabsichtigten Loslassen des Bedienhebels oder einem Fallenlassen des Handwerkzeugs im Falle eines Unfalls findet somit eine automatische Not-Abschaltung beziehungsweise Sicherheitsabschaltung statt.

Nach einer Weiterbildung der Erfindung ist der Bedienhebel über eine verstellbare Führung in Bezug auf die Gehäuseausnehmung des Handgriffgehäuses radial verschiebbar an dem Handgriff gehalten derart, dass der Bedienhebel den Mitnehmer des Antriebsstrangs
- in einer Arretierstellung der Führung axial sichert gegen ein Verschieben des Abtriebsendes des Antriebsstrangs zum hinteren Ende der Gehäuseausnehmung über die Auskupplungsposition hinaus und
- in einer Freilegungsstellung der Führung den Mitnehmer freilegt, sodass der Antriebsstrang über die Einführungsöffnung hinaus herausnehmbar ist aus der Gehäuseausnehmung.

Die Führung für den Bedienhebel ermöglicht somit in der Arretierstellung eine Verliersicherung für den Antriebsstrang. Weiter ist über die Führung mit einem einfachen Handgriff ein Lösen beziehungsweise eine vollständige Entnahme des Antriebsstrangs gegenüber dem Handgriff beziehungsweise die Einführung desselben in den Handgriff ermöglicht in der Freilegungsstellung der Führung.

Nach einer Weiterbildung der Erfindung weist die Führung für den Bedienhebel eine Führungsfeder auf, welche die Führung in der Arretierstellung als Ruhestellung hält.

Auf diese Weise ist im normalen Gebrauch des Handwerkzeugs sichergestellt, dass der Antriebsstrang verliersicher an dem Handgriff gehalten ist und nur durch Aufbringung einer der Führungsfeder entgegenwirkenden Handkraft auf den Bedienhebel durch den Bediener entnommen werden kann.

Nach einer Weiterbildung der Erfindung weist die Führung für den Bedienhebel wenigstens ein Langloch auf, wobei durch das Langloch ein vorzugsweise durch einen Gelenkbolzen beziehungsweise eine Gelenkschraube gebildetes Drehgelenk für den Bedienhebel hindurchgeführt ist. Vorteilhaft ist entlang einer Längserstreckung des Langlochs ein Verstellweg für die Führung des Bedienhebels definiert. Das Langloch gibt insofern ein Anschlagelement für die Freilegungs- und die Arretierstellung der Führung an.

Vorzugsweise ist in dem wenigstens einen Langloch der Führung jeweils eine Führungsfeder angeordnet.

Nach einer Weiterbildung der Erfindung ist die formschlüssige Verbindung zwischen dem Zahnrad und dem Abtriebsende des Antriebsstrangs in der Kupplungsposition gebildet durch
- eine Kupplungshülse mit einem Hülsenring und mit wenigstens zwei und vorzugsweise drei in dem Hülsenring radial umlaufend gleich verteilt angeordneten Zylinderstiften einerseits und
- einen in die Kupplungshülse formschlüssig eingreifenden Kupplungszapfen mit einer zu den Zylinderstiften der Kupplungshülse korrespondierenden Anzahl an radial umlaufend gleich verteilt angeordneten und axial orientierten Längsausnehmungen andererseits.

Die Kupplungshülse und der Kupplungszapfen geben insofern eine Drehkupplung für die erfindungsgemäße Kupplungsanordnung an.

Vorteilhaft sind die Zylinderstifte und die Längsausnehmungen derart korrespondierend zueinander geformt, dass die Drehkupplung selbstfindend ist. Zweckmäßig ist es hierfür, wenn die Längsausnehmungen des Kupplungszapfens eine größere radiale Breite aufweisen als die Zylinderstifte und wenn zwischen den Längsausnehmungen jeweils ein möglichst schmaler Reststeg verbleibt. Die Reststege weisen bevorzugt eine Dicke auf, die kleiner gleich einem Durchmesser der Zylinderstifte ist. Die Reststege weisen vorzugsweise ferner zu einem stirnseitigen, der Kupplungshülse zugewandten Ende des Kupplungszapfens hin eine Fase beziehungsweise einen Radius auf. Ebenfalls ist es zweckmäßig, wenn die Längsausnehmungen jedenfalls an ihren radialen Rändern eine Fase beziehungsweise einen Radius aufweisen. Die Zylinderstifte sind im Querschnitt bevorzugt so dimensioniert, dass sie gegenüber dem Hülsenring abschnittsweise radial-innenliegend hervorstehen. Die hierdurch realisierte Selbstfindung der Drehkupplung funktioniert dabei wie folgt: Sofern beim Einkuppeln beziehungsweise Aufstecken der Kupplungshülse auf den Kupplungszapfen die Reststege auf die Zylinderstifte treffen, werden die Reststege von dem runden Querschnitt der Zylinderstifte automatisch jeweils so abgeleitet, dass die Zylinderstifte in die Längsausnehmungen aufgenommen sind.

Nach einer Weiterbildung der Erfindung ist der Kupplungszapfen von dem Zahnrad und die Kupplungshülse von dem Antriebsstrang bereitgestellt.

Vorzugsweise ist die Kupplungshülse als ein Aufsetzstück ausgebildet und mit einem dem Hülsenring axial gegenüberliegenden ringzylindrischen Schaft auf ein abtriebsseitiges Ende der flexiblen Antriebswelle aufgesteckt. Die Ringzylinderform des Schafts bedeutet, dass die Kupplungshülse auf Höhe des Schafts eine Bohrung aufweist, worüber sie auf die flexible Antriebswelle aufsteckbar ist. Vorteilhaft ist hierdurch der mit dem Zahnrad in Eingriff verbringende und damit einem erhöhten Verschleiß unterlegene Teil des Antriebsstrangs als ein auswechselbares Verschleißteil ausgeführt.

Nach einer Weiterbildung der Erfindung ist an dem Handgriffgehäuse ein ringförmiges und den Handgriff mit einem radialen Abstand umlaufendes Anschlagselement gehalten, welches einen Anschlag für den Sicherungshebel in der Blockierstellung beziehungsweise für den Bedienhebel in einer mit der Auskupplungsposition des Antriebsstrangs korrespondierenden Ausschwenkstellung definiert.

Das Anschlagelement ist bevorzugt spaltringförmig ausgeführt, sodass ein Umfang des Anschlagelements, beispielsweise mittels einer in einen Ringspalt des Anschlagelements einführbaren Schraube oder dergleichen einstellbar ist. Ebenso ist hierdurch die Montage vereinfacht.

Das Handwerkzeug ist insbesondere ein Fleisch-Trimmer mit einem Kreismesser, welches in einer an dem Kopfstück gehaltenen Messerführung rotierbar gelagert ist und welches über einen in das Zahnrad eingreifenden Messerzahnkranz von dem Zahnrad antreibbar ist.

Zur Lösung der Aufgabe weist die Erfindung die Merkmale des Patentanspruchs 12 auf. Demzufolge findet die erfindungsgemäße Kupplungsanordnung Verwendung in einem Fleisch-Trimmer als Handwerkzeug.

Zur Lösung der Aufgabe weist die Erfindung die Merkmale des Patentanspruchs 13 auf. Demzufolge umfasst ein erfindungsgemäßer Fleisch-Trimmer eine erfindungsgemäße Kupplungsanordnung und ein Kreismesser, welches in einer an dem Kopfstück der Kupplungsanordnung gehaltenen Messerführung rotierbar gelagert ist und welches über einen in das Zahnrad der Kupplungsanordnung eingreifenden Messerzahnkranz von dem Zahnrad antreibbar ist.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der erfindungsgemäßen Kupplungsanordnung gelten selbstverständlich auch im Zusammenhang mit dem erfindungsgemäßen Fleisch-Trimmer beziehungsweise der erfindungsgemäßen Verwendung und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter. Es zeigen:
- Fig. 1: eine perspektivische Rückansicht eines Fleisch-Trimmers mit einer erfindungsgemäßen Kupplungsanordnung und mit einem eingeführtem Antriebsstrang in einer Auskupplungsposition, wobei ein Sicherungshebel der erfindungsgemäßen Kupplungsanordnung in einer Blockierstellung gehalten ist,
- Fig. 2: eine perspektivische Einzelansicht des Fleisch-Trimmers nach Fig. 1 von vorne,
- Fig. 3: eine Einzelansicht des Fleisch-Trimmers nach Fig. 1 von der Seite,
- Fig. 4: eine Einzelansicht des Fleisch-Trimmers nach Fig. 1 im seitlichen Vollschnitt,
- Fig. 5: eine vereinfachte seitliche Schnittansicht des Fleisch-Trimmers nach Fig. 1 mit dem eingeführten Antriebsstrang in der Auskupplungsposition,
- Fig. 6: das Detail W aus Fig. 5,
- Fig. 7: eine Einzelansicht des Fleisch-Trimmers nach Fig. 1 im seitlichen Vollschnitt, wobei gegenüber Fig. 1 der Sicherungshebel in eine Freigabestellung verbracht ist,
- Fig. 8: eine vereinfachte seitliche Schnittansicht des Fleisch-Trimmers nach Fig. 7 mit dem eingeführten Antriebsstrang in der Auskupplungsposition,
- Fig. 9: das Detail X aus Fig. 8,
- Fig. 10: eine Einzelansicht des Fleisch-Trimmers nach Fig. 1 im seitlichen Vollschnitt, wobei gegenüber Fig. 7 ein Bedienhebel der erfindungsgemäßen Kupplungsanordnung verbracht ist in eine Einschwenkstellung,
- Fig. 11: eine vereinfachte seitliche Schnittansicht des Fleisch-Trimmers nach Fig. 10 mit dem eingeführten Antriebsstrang in einer Kupplungsposition,
- Fig. 12: das Detail Y aus Fig. 11,
- Fig. 13: eine perspektivische Rückansicht des Fleisch-Trimmers nach Fig. 1 mit einer Führung der erfindungsgemäßen Kupplungsanordnung in einer Freilegungsstellung,
- Fig. 14: eine Einzelansicht des Fleisch-Trimmers nach Fig. 13 im seitlichen Vollschnitt,
- Fig. 15: eine vereinfachte seitliche Schnittansicht des Fleisch-Trimmers nach Fig. 13 mit dem eingeführten Antriebsstrang in einer nicht gekuppelten, Zwischenstellung,
- Fig. 16: das Detail Z aus Fig. 15,
- Fig. 17: eine Einzelansicht eines in einen Handgriff des Fleisch-Trimmers nach Fig. 1 einführbaren Teil des Antriebsstrangs im Vollschnitt und
- Fig. 18: ein Zahnrad und eine Kupplungshülse des Fleisch-Trimmers nach Fig. 1 in einer Explosionseinzelansicht.

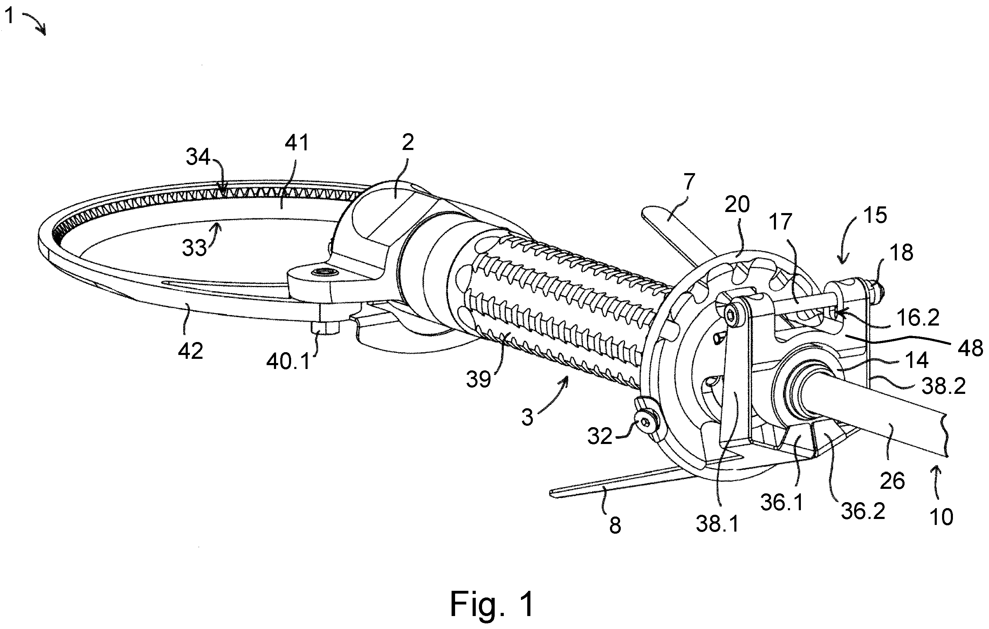

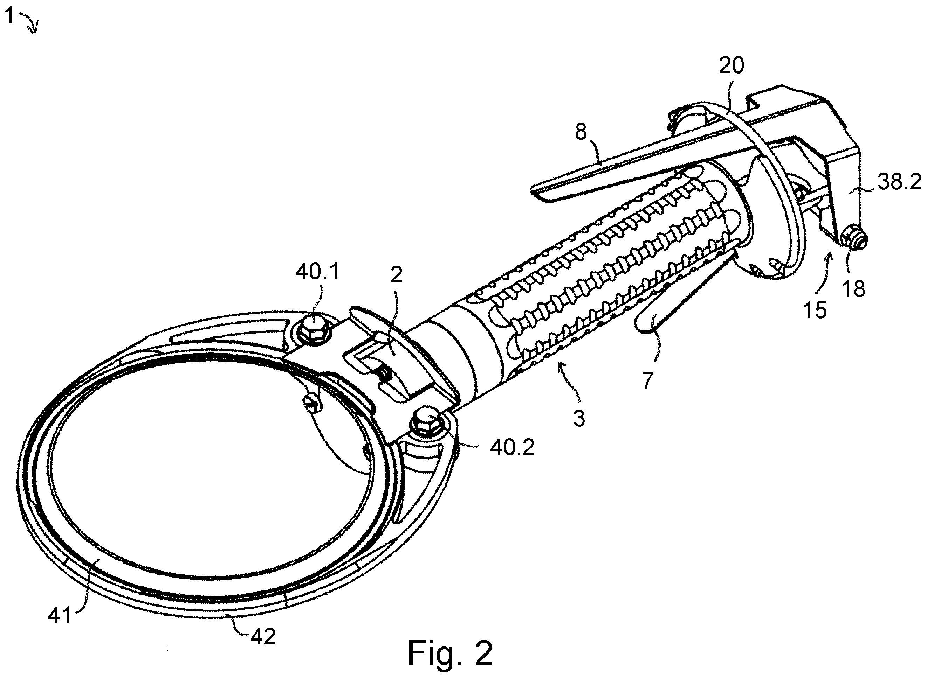

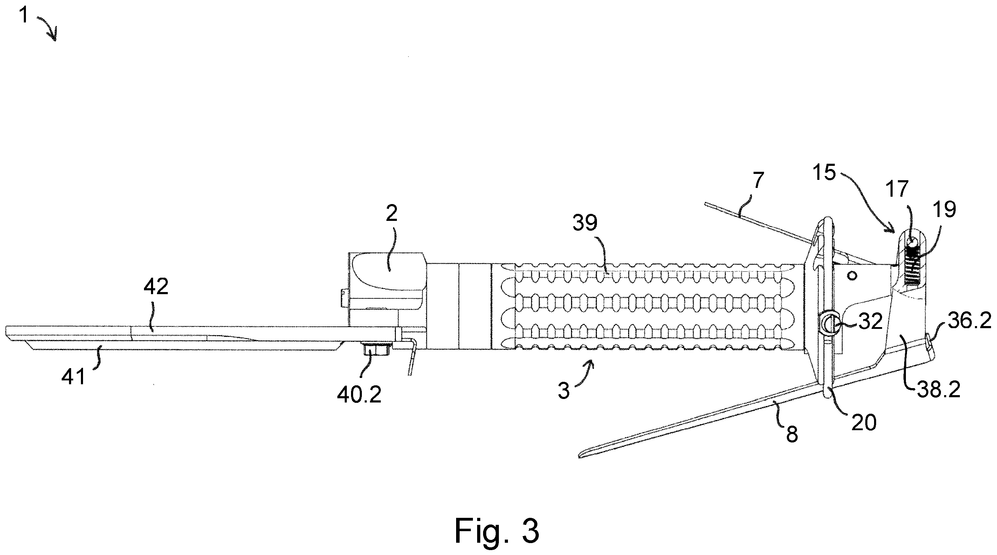

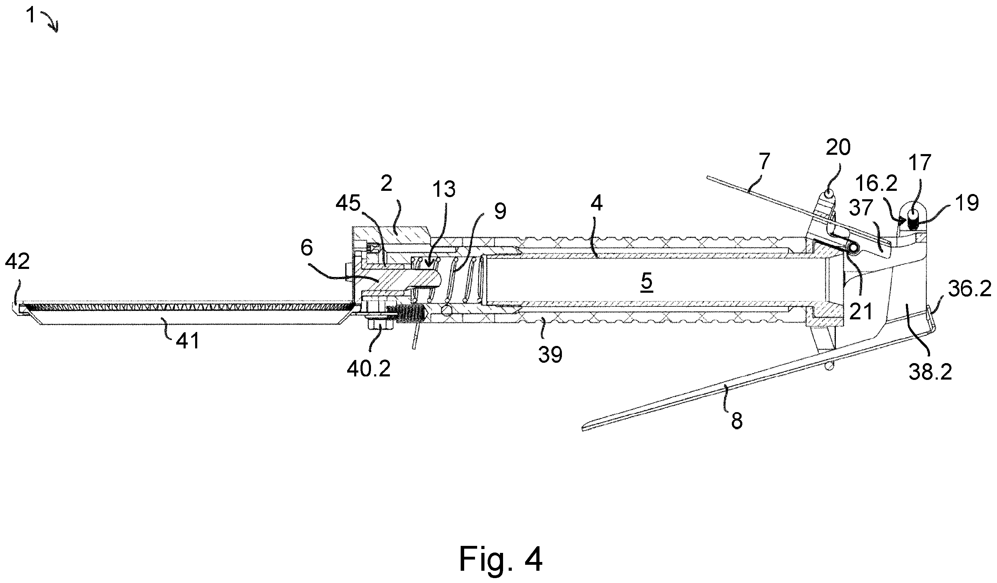

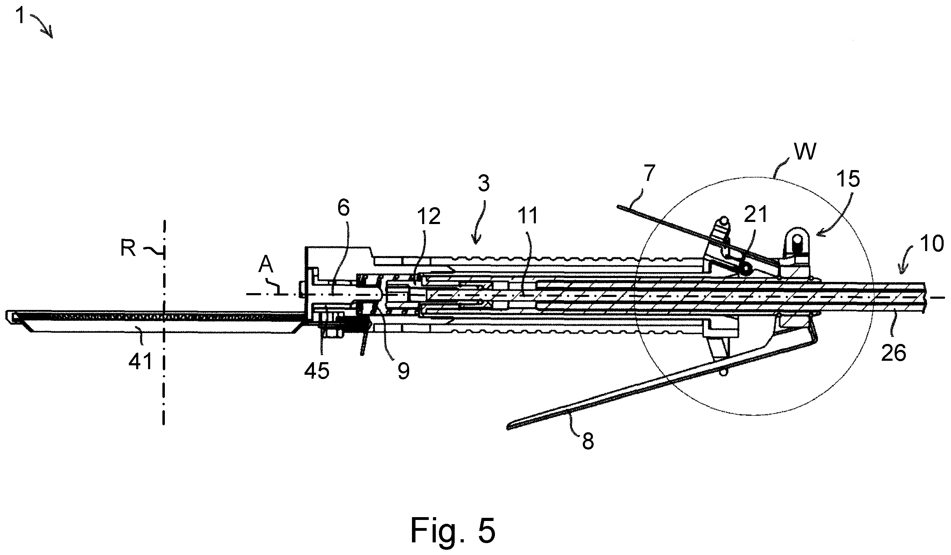

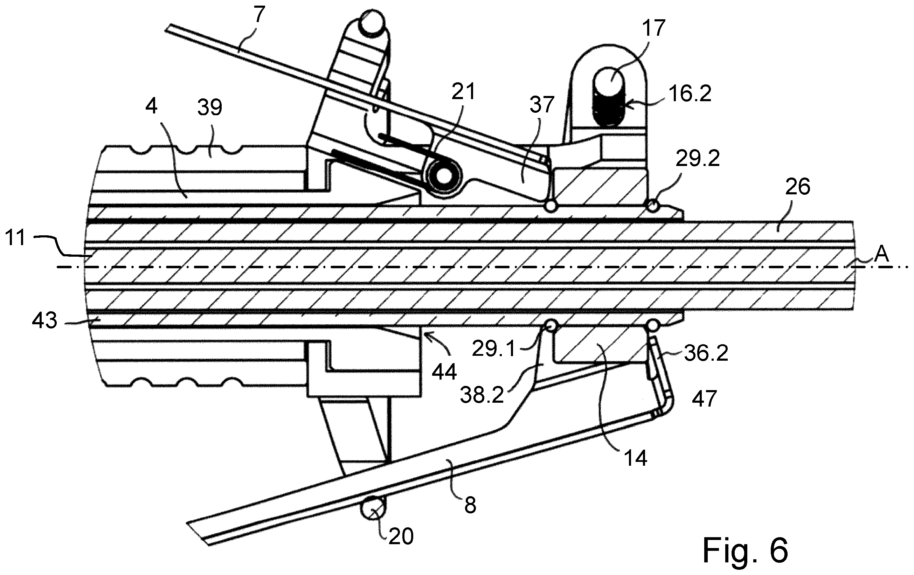

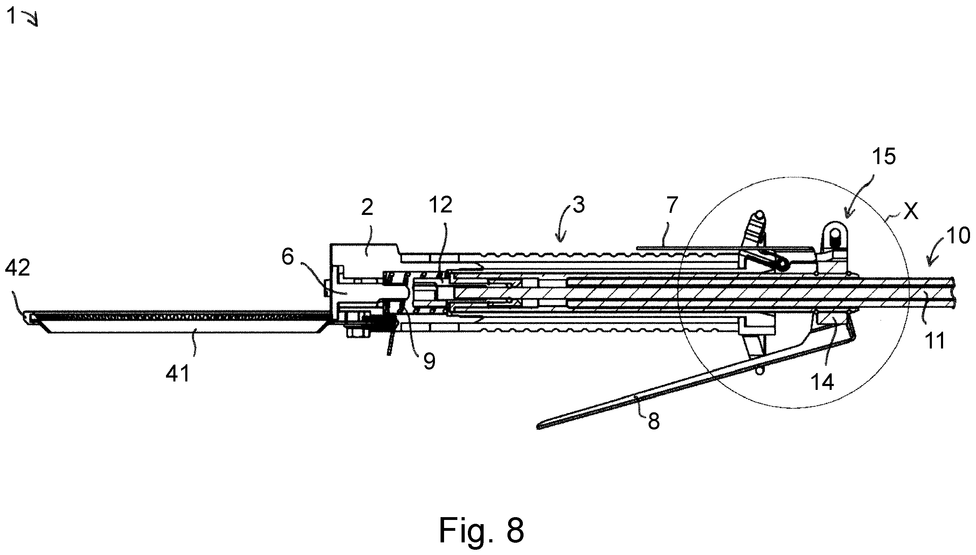

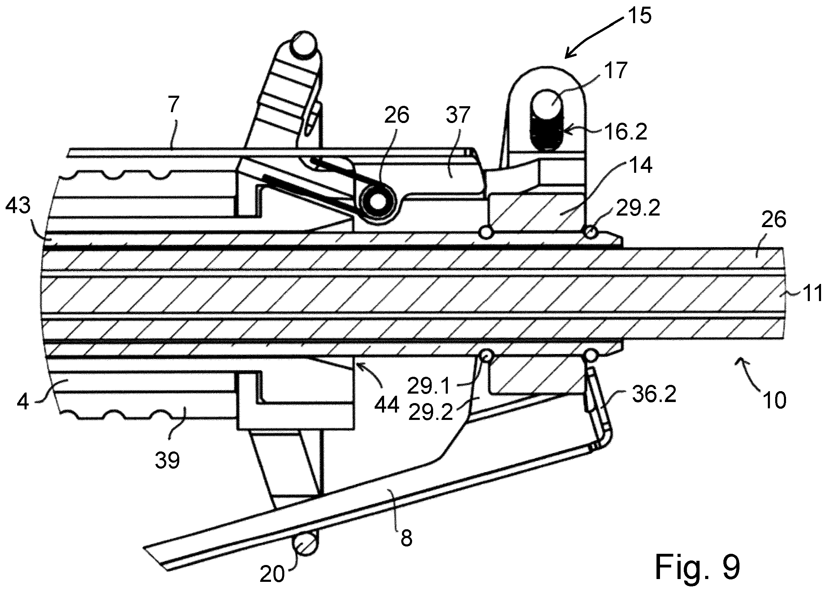

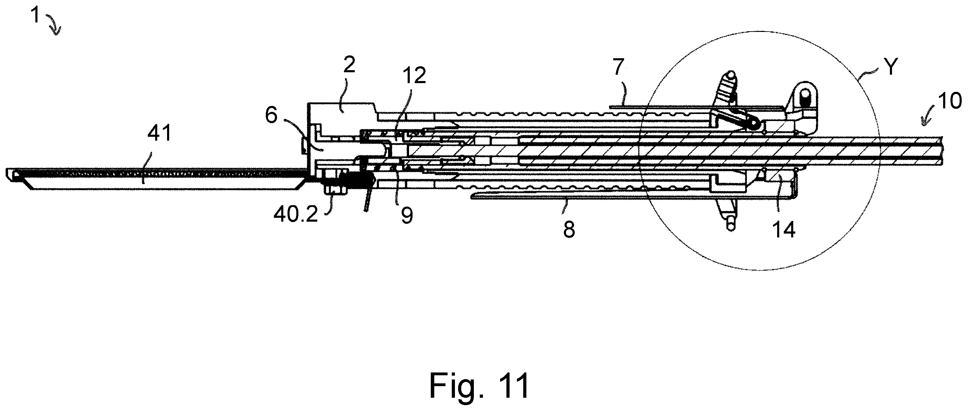

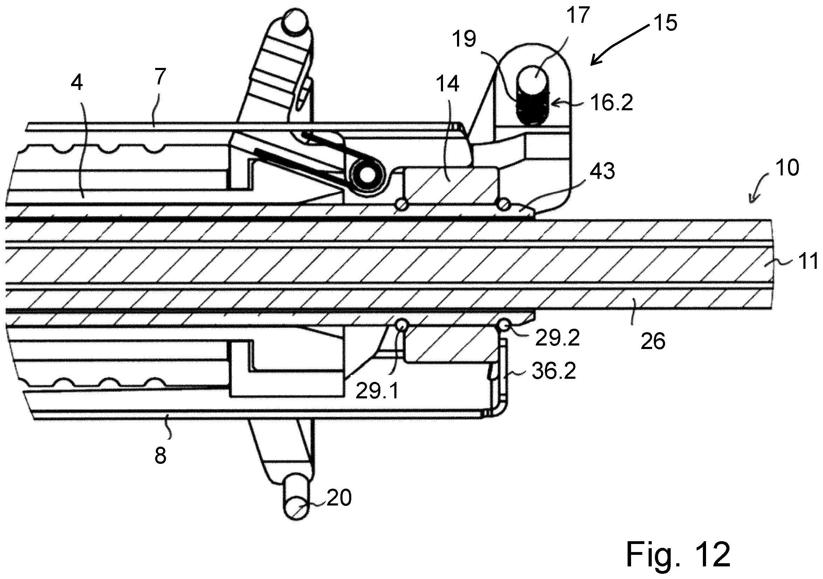

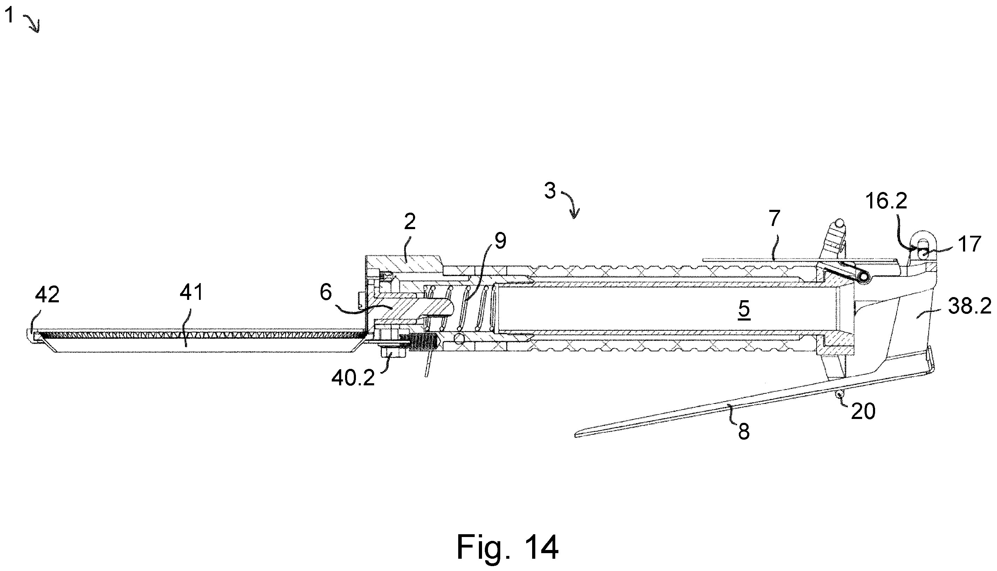

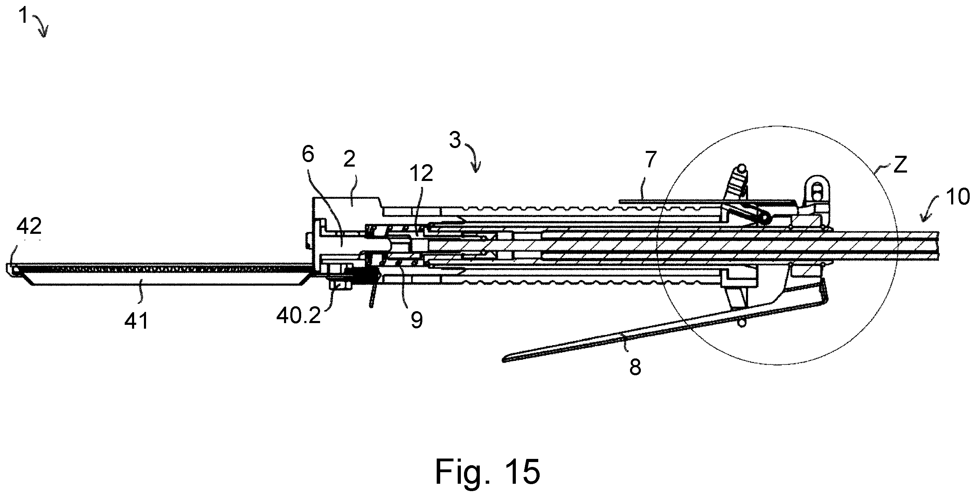

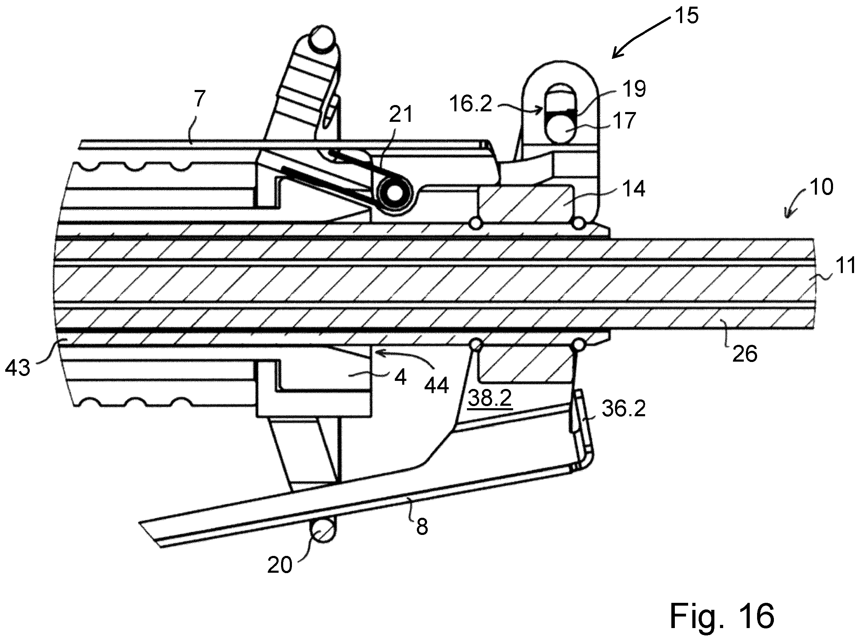

Ein bevorzugtes Ausführungsbeispiel für einen Fleisch-Trimmer 1 mit einer erfindungsgemäßen Kupplungsanordnung ist in den Fig. 1 bis 18 angegeben.

Der Fleisch-Trimmer 1 weist hier ein um eine Rotationsachse R rotatorisch antreibbares Kreismesser 41 als Handwerkzeug auf, welches mittels der erfindungsgemäßen Kupplungsanordnung ankoppelbar ist an einen Antriebsstrang 10 mit einer flexiblen Antriebswelle 11. Das Kreismesser 41 ist in einer ringförmigen Messerführung 42 rotierbar gelagert aufgenommen, welche mittels zwei Verbindungsschrauben 40.1, 40.2 an einem Kopfstück 2 der Kupplungsanordnung gehalten ist. Das Kreismesser 41 weist an einer ersten Messerstirnseite eine ringförmige Schneidklinge 33 und an einer gegenüberliegenden zweiten Messerstirnseite einen kreisringförmig umlaufenden Messerzahnkranz 34 auf, über welchen das Kreismesser 41 mittels eines in dem Kopfstück 2 der Kupplungsanordnung aufgenommenen Zahnrads 6 antreibbar ist. Das Zahnrad 6 weist hierfür einen Zahnkranz 46 auf, welcher im Betrieb des Fleisch-Trimmers 1 mit dem Messerzahnkranz 34 des Kreismessers 41 in Eingriff steht.

Als weiterer Bestandteil der erfindungsgemäßen Kupplungsanordnung schließt sich ein stabförmig längserstreckter Handgriff 3 mit einem vorderen Ende an das Kopfstück 2 an. Der Handgriff 3 weist ein im Wesentlichen zylindrisches Handgriffgehäuse 4 mit einer von dem Handgriffgehäuse 4 umschlossenen, im Wesentlichen zylindrisch ausgeführten Gehäuseausnehmung 5 auf, welche sich von dem vorderen Ende bis zu einem gegenüberliegenden hinteren Ende des Handgriffs 3 durchlaufend erstreckt, sodass an dem hinteren Ende des Handgriffs 3 eine Einführungsöffnung 44 gebildet ist, durch welche der Antriebsstrang 10 mit der biegeflexiblen Antriebswelle 11 in die Gehäuseausnehmung 5 einführbar beziehungsweise entnehmbar ist. Das Handgriffgehäuse 4 ist hier zum Kopfstück 2 hin außenseitig mit Distanzringen sowie insbesondere mit einem Kunststoffgriff 39 ummantelt, welches einem Bediener des Fleisch-Trimmers 1 einen sicheren Halt bietet beziehungsweise ein Abrutschen entlang des Handgriffs 3 verhindert und insofern für eine verbesserte Bediensicherheit sorgt.

Die Kupplungsanordnung sieht des Weiteren im Bereich des hinteren Endes des Handgriffs 3 einen Sicherungshebel 7 als Sicherungselement sowie einen Bedienhebel 8 vor, welche jeweils verschwenkbar an dem Handgriffgehäuse 4 des Handgriffs 3 angelenkt sind.

Der Bedienhebel 8 ist vorgesehen, den zum Antreiben des Kreismessers 41 in die Gehäuseausnehmung 5 eingeführten Antriebsstrang 10 axial entlang einer Antriebsachse A, um welche der in die Gehäuseausnehmung 5 aufgenommene Abschnitt des Antriebsstrangs 10 in Betrieb rotiert, direkt zu verschieben derart, dass ein Abtriebsende des Antriebsstrangs 10 zum vorderen Ende des Handgriffs 3 hin in eine Kupplungsposition verbringbar ist. In der Kupplungsposition ist eine formschlüssige Verbindung des Antriebsstrangs 10 mit dem Zahnrad 6 hergestellt. Ebenso kann über eine gegenläufige Schwenkbewegung des Bedienhebels 8 der Antriebsstrang 10 zum hinteren Ende des Handgriffs 3 hin verschoben werden, sodass die Kupplungsposition und die formschlüssige Verbindung zwischen dem Abtriebsende des Antriebsstrangs 10 und dem Zahnrad 6 in einer Auskupplungsposition wieder aufgelöst sind beziehungsweise der Antriebsstrang 10 und das Zahnrad 6 miteinander außer Eingriff verbracht sind.

Die Kupplungsanordnung sieht hier ferner eine Kupplungsfeder 9 vor, welche als ein Kraftmittel beziehungsweise Rückstellelement ausgebildet ist und im Bereich des vorderen Endes des Handgriffs 3, zwischen dem Zahnrad 6 und dem Abtriebsende des Antriebsstrangs 10 angeordnet, in der Gehäuseausnehmung 5 aufgenommen ist. Die Kupplungsfeder 9 verbleibt bei Entnahme des Antriebsstrangs 10 in der Gehäuseausnehmung 5 des Handgriffs 3. Die Kupplungsfeder 9 ist hier als eine Spiralfeder ausgeführt, sodass ein Kupplungszapfen 13 des Zahnrads 6 sowie das Abtriebsende des Antriebsstrangs 10 abschnittsweise in die Kupplungsfeder 9 hineinragen können. Die Kupplungsfeder 9 ist vorgesehen, den in die Gehäuseausnehmung 5 eingeführten Antriebsstrang 10 in der Auskupplungsposition als Ruheposition zu halten. Demzufolge ist über den Bedienhebel 8 eine Handkraft von einem Bediener aufzubringen, welche den Antriebsstrang 10 gegen die Kupplungsfeder 9 in die Kupplungsposition drückt.

Der Sicherungshebel 7 ist hier ein wesentlicher Bestandteil einer von der Kupplungsanordnung angegebenen Einhand-Sicherheitsbedienabschaltung. Der Sicherungshebel 7 ist an einer axial in Bezug auf den Handgriff 3 beziehungsweise in Bezug auf die Antriebsachse A gegenüberliegenden Seite zu dem Bedienhebel 8 angeordnet und dient dazu, einen ungewollten Antrieb des Kreismessers 41 beziehungsweise ein ungewolltes Einkuppeln des Antriebsstrangs 10 mit dem Zahnrad 6 zu verhindern. Zur Inbetriebnahme des Fleisch-Trimmers 1 beziehungsweise zum Antrieb des Kreismessers 41 ist insofern der Sicherungshebel 7 zwingend zu betätigen und an den Handgriff 3 in eine Einschwenkstellung zu verbringen, um überhaupt ein Ankoppeln des Antriebsstrangs 10 an das Zahnrad 6 über den Bedienhebel 8 zu ermöglichen.

An dem Griffgehäuse 4 des Handgriffs 3 ist ein spaltringförmiges Anschlagelement 20 über eine Halteschraube 32 gehalten, welches für den Bedienhebel 8 in der Ausschwenkstellung als Anschlag dient.

Konstruktiv realisiert ist dies in der erfindungsgemäßen Kupplungsanordnung dadurch, dass der Antriebsstrang 10 einen radial in Bezug auf die Antriebsachse A beziehungsweise flexible Antriebswelle 11 hervorstehenden Mitnehmer 14 aufweist. Der Sicherungshebel 7 ist über eine Hebelfeder 21 in einer gegenüber dem Handgriff 3 ausgeschwenkten Blockierstellung als Ruhestellung gehalten und ist in der Blockierstellung axial in Bezug auf die Antriebsachse A vor dem Mitnehmer 14 des in die Gehäuseausnehmung 5 des Handgriffs 3 eingeführten Antriebsstrangs 10 angeordnet. Ein Vorschieben des Antriebsstrangs 10 in die Kupplungsposition hinein ist insofern solange blockiert, wie sich der Sicherungshebel 7 in der Blockierstellung befindet. Der Bedienhebel 8 ist in der Blockierstellung des Sicherungshebels 7 somit nicht betätigbar. Die Bediensicherheit ist hierdurch erhöht, da eine unbeabsichtigte Inbetriebnahme des Handwerkzeugs durch ein Anlegen des Bedienhebels infolge eines Unfalls oder einer ungeschickten Bewegung des Bedieners ausgeschlossen ist.

Der Sicherungshebel 7 und der Bedienhebel 8 sind zudem so an dem Handgriff 3 angeordnet und dimensioniert, dass ein gleichzeitiges Umgreifen beider Hebel 7, 8 durch eine Hand des Bedieners beziehungsweise eine Einhand-Bedienung ermöglicht sind. Dem Bediener ist hierdurch eine komfortable und insbesondere sichere Möglichkeit zur Bedienung und zur Inbetriebnahme (Start) beziehungsweise Außerbetriebnahme (Stopp) des Fleisch-Trimmers 1 angegeben.

Die Kupplungsanordnung umfasst des Weiteren eine Führung 15 für den Bedienhebel 8, worüber der Antriebsstrang 10 wahlweise gegen ein unbeabsichtigtes Lösen von dem Handgriff 3 gesichert beziehungsweise zur vollständigen Entnahme beziehungsweise zum Lösen von dem Handgriff 3 freigelegt werden kann.

Die Führung 15 weist hier eine an dem Handgriff 3 gehaltene U-förmige beziehungsweise gabelförmige Halterung 48 mit zwei radial nach außen abstehenden, gleichlangen Schenkeln auf, in denen jeweils ein Langloch 16.1, 16.2 vorgesehen ist. Der Bedienhebel 8 weist zwei Haltearme 38.1, 38.2 auf, die jeweils einen Durchbruch aufweisen und auf Höhe der Langlöcher 16.1, 16.2 angeordnet sind, wobei durch die Durchbrüche und die Langlöcher 16.1, 16.2 eine Gelenkschraube 17, welche mit einer Gelenkschraubenmutter 18 axial gekontert ist, hindurchgeführt ist. Auf diese Weise ist für den Bedienhebel 8 ein Drehgelenk gebildet.

Zudem weist die Führung 15 hier jeweils eine in den Langlöchern 16.1, 16.2 gehaltene Führungsfeder 19 auf, welche als ein Rückstellelement dient und die Führung 15 in einer Arretierstellung als Ruhestellung hält. In der Arretierstellung der Führung 15 ist der Bedienhebel 8 hier über zwei Arretiernasen 36.1, 36.2 abschnittsweise axial in Bezug auf die Antriebsachse A hinter dem Mitnehmer 14 des Antriebsstrangs 10 positioniert, wodurch die Führung 15 den Antriebsstrang 10 gegen ein axiales Herausverschieben zum hinteren Ende der Gehäuseausnehmung 5 des Handgriffs 3 sichert. Die Gelenkschraube 17 ist hierbei über die Führungsfeder 19 an ein oberes Ende der Langlöcher 16.1, 16.2 angelegt.

Die Fig. 1 bis 6 zeigen den Fleisch-Trimmer 1 jeweils mit den Hebeln 7, 8 in einer Ruhestellung beziehungsweise im unbetätigten Zustand. Der Sicherungshebel 7 ist hierbei über die Hebelfeder 21, welche hier als Torsionsfeder ausgeführt ist, in der gegenüber dem Handgriff 3 ausgeschwenkten Blockierstellung gehalten. Der Bedienhebel 8 ist in der gegenüber dem Handgriff 3 ausgeschwenkten Ausschwenkstellung gehalten.

Die Ausschwenkstellung bildet eine Ruhestellung beziehungsweise Ausgangsstellung für den Bedienhebel 8, sofern der Antriebsstrang 10 in der Gehäuseausnehmung 5 des Handgriffs 3 bis zur Auskupplungsposition eingeführt ist. In diesem Fall wirkt die Kupplungsfeder 9 als Rückstellelement für den Bedienhebel 8. Die Führung 15 für den Bedienhebel 8 ist dabei in der Arretierstellung gehalten, in welcher der Mitnehmer 14 des Antriebsstrangs 10 axial gesichert ist über die Arretiernasen 36.1, 36.2 des Bedienhebels 8. Der Antriebsstrang 10 und das Zahnrad 6 sind hierbei insofern voneinander entkoppelt beziehungsweise außer Eingriff verbracht. Ein Antrieb des Kreismessers 41 ist insofern nicht möglich.

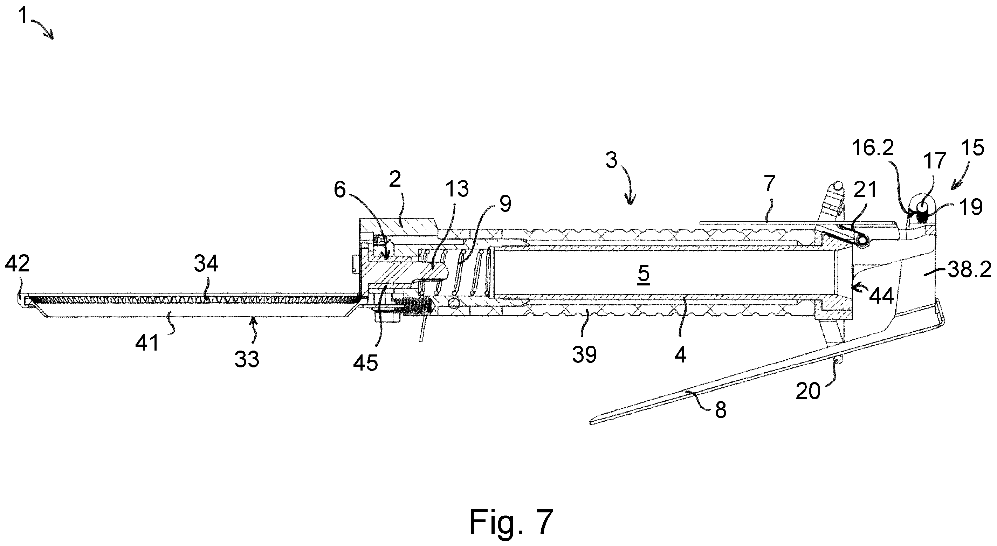

Die Fig. 7 bis 9 geben verschiedene Ansichten für den Fleisch-Trimmer 1 an, wobei hier der Sicherungshebel 7 aus der ausgeschwenkten Blockierstellung in die gegenüber dem Handgriff 3 eingeschwenkte Freigabestellung verbracht ist. In der Freigabestellung ist der Sicherungshebel 7 gegen eine von der Hebelfeder 21 aufgebrachte Rückstellkraft eingeschwenkt und im Wesentlichen parallel zu dem stabförmigen Handgriff 3 orientiert, wobei ein Sicherungsnocken 37 des Sicherungshebels 7 derart ausgeschwenkt ist, dass ein axiales Einschieben des Mitnehmers 14 in Richtung des vorderen Endes des Handgriffs 3 ermöglicht ist. Eine Betätigung des Bedienhebels 8 ist insofern in dieser Freigabestellung des Sicherungshebels 7 ermöglicht, sodass der Antriebsstrang 10 aus der Auskupplungsposition in die Kupplungsposition verschoben werden kann.

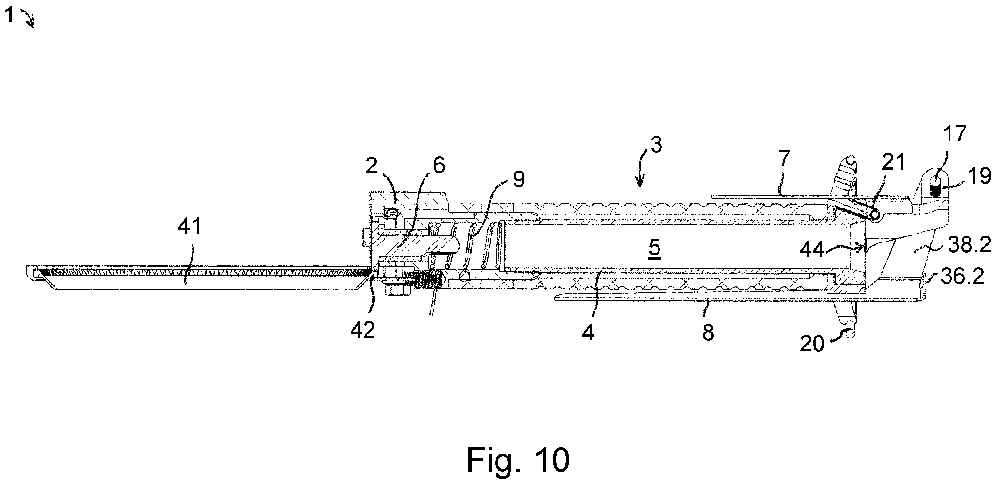

Die Fig. 10 bis 12 zeigen den Fleisch-Trimmer 1 mit dem Sicherungshebel 7 in der eingeschwenkten Freigabestellung und mit dem hier aus der Ausschwenkstellung in die eingeschwenkte Einschwenkstellung verbrachten Bedienhebel 8. Über diese Schwenkbewegung beziehungsweise Betätigung des Bedienhebels 8 hat dieser den Mitnehmer 14 des Antriebsstrangs 10 zum vorderen Ende des Handgriffs 3 hin axial soweit vorgeschoben, dass das Abtriebsende des Antriebsstrangs 10 in die Kupplungsposition verbracht ist. In der Kupplungsposition ist das Abtriebsende des Antriebsstrangs 10 mit dem Zahnrad 6 in Eingriff verbracht und dazwischen ist eine formschlüssige Verbindung hergestellt. Der Bedienhebel 8 weist hierfür die an den Mitnehmer 14 angelegten Arretiernasen 36.1, 36.2 auf. Durch die formschlüssige Verbindung zwischen dem Zahnrad 6 und dem Antriebsstrang 10 kann dabei insofern das Kreismesser 41 von dem Antriebsstrang 10 rotatorisch angetrieben werden. Der Antriebsstrang 10 ist hierfür über ein figürlich nicht dargestelltes und dem Abtriebsende gegenüberliegendes Antriebsende an einen Antriebsmotor oder dergleichen angekoppelt, welcher die benötigte Antriebsenergie bereitstellt. Die Kupplungsfeder 9 ist hierbei gespannt.

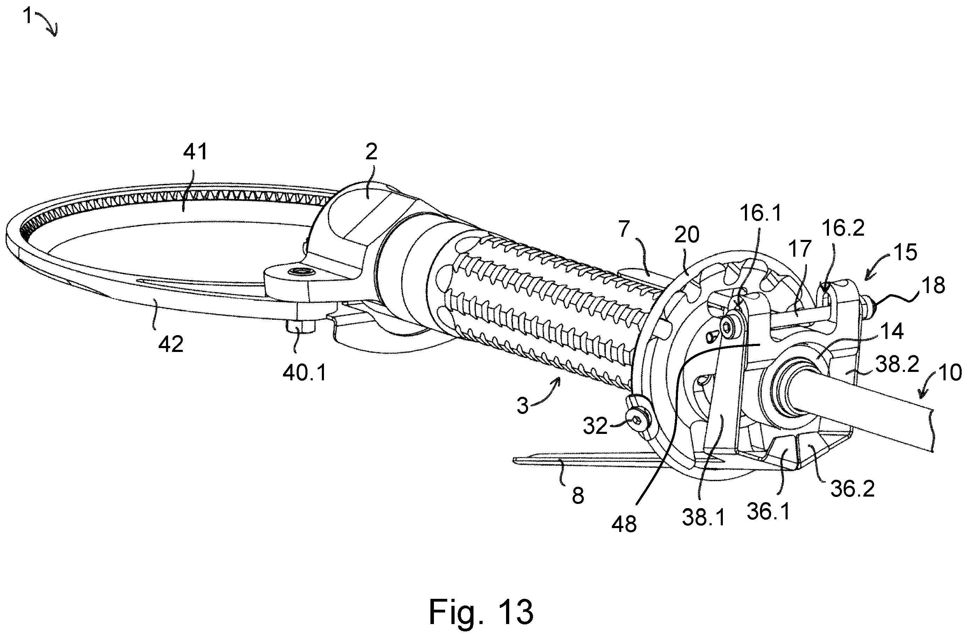

Die Fig. 13 bis 16 zeigen den Fleisch-Trimmer 1 mit der Führung 15 für den Bedienhebel 8 in einer Freilegungsstellung. Der Bedienhebel 8 ist hierbei vom Bediener über eine aufgebrachte Betätigungskraft in Bezug auf die figürliche Zeichnungsebene nach unten und gegen die Rückstellkräfte der Führungsfedern 19 gezogen worden, wobei die Arretiernasen 36.1, 36.2 nunmehr auf eine Position radial in Bezug auf die Antriebsachse A außerhalb des Mitnehmers 14 des Antriebsstrangs 10 verbracht sind. Die Gelenkschraube 17 ist an ein unteres Ende der Langlöcher 16.1, 16.2 angelegt. Die Langlöcher 16.1, 16.2 definieren insofern einen Verstellweg für die Führung 15. In der Freilegungsstellung der Führung 15 kann insofern der Mitnehmer 14 und damit der gesamte Antriebsstrang 10 zum hinteren Ende heraus vollständig aus der Gehäuseausnehmung 5 des Handgriffs 3 entnommen werden. Der Sicherungshebel 7 befindet sich hierbei in der eingeschwenkten Freigabestellung.

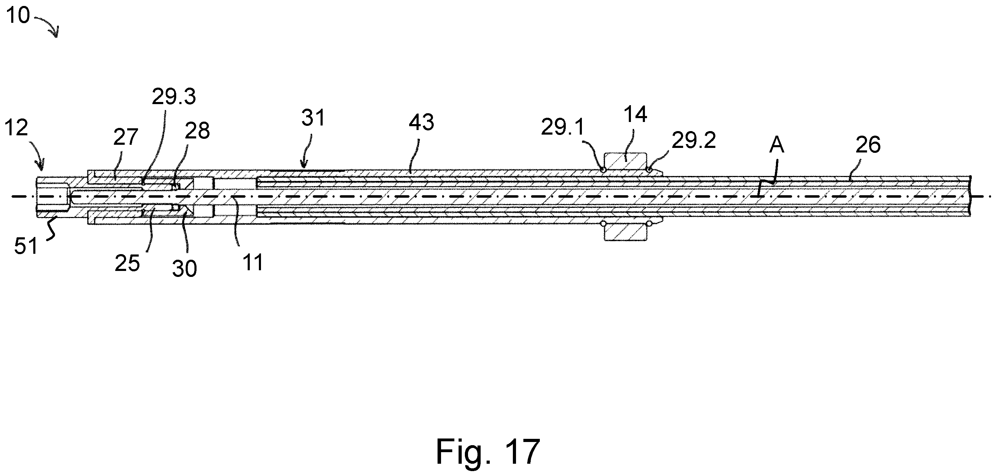

Die Fig. 17 zeigt abschnittsweise den Antriebsstrang 10 mit dem in die Gehäuseausnehmung 5 des Handgriffs 3 einschiebbaren Teilabschnitt. Die flexible Antriebswelle 11 ist hierbei in weiten Teilen von einem flexiblen Wellenschlauch 26 ummantelt, wobei die Antriebswelle 11 im Bereich des Abtriebsendes freigelegt beziehungsweise nicht von dem Wellenschlauch 26 ummantelt ist. Im Bereich des Abtriebsendes ist auf die flexible Antriebswelle 11 endseitig eine Kupplungshülse 12 im Bereich eines ringzylindrischen Schafts 25 aufgesteckt. Der Schaft 25 der Kupplungshülse 12 ist über eine Bundbuchse 27 rotatorisch gelagert. Die Bundbuchse 27 wiederum ist in ein abtriebseitiges Stirnende einer gecrimpten Schlauchhülse 43 eingesteckt. Die Vercrimpung ist durch das Bezugszeichen 31 dargestellt.

Die Schlauchhülse 43 bildet eine zweite, Verschleiß vorbeugende Ummantelung für den in die Gehäuseausnehmung 5 des Handgriffs 3 einführbaren Teil des Antriebsstrangs 10. An einem in Bezug auf die Antriebsachse A der Bundbuchse 27 gegenüberliegenden Endabschnitt ist der ringförmige Mitnehmer 14 auf die Schlauchhülse 43 aufgeschoben und über Sicherungsringe 29.1, 29.2 axial festgelegt.

Für ein vereinfachtes Aufschieben der Sicherungsringe 29.1, 29.2 auf die Schlauchhülse 43 weist diese eine endseitige Fase auf.

An die Bundbuchse 27 schließt sich eine Traghülse 30 an, welche auf das Abtriebsende der flexiblen Antriebswelle 11 aufgesteckt ist und den Schaft 25 der Kupplungshülse 12 radial umschließt. Dabei ist zwischen dem Schaft 25 und der Traghülse 30 ein Dichtring 28 beziehungsweise O-Ring angeordnet, welcher zur axialen Sicherung der flexiblen Antriebswelle 11 dient.

Die Kupplungshülse 12 weist einen axial freigelegten Hülsenkopf 51 auf, welcher mit einem rechtwinkligen Absatz radial gegenüber dem Schaft 25 der Kupplungshülse 12 hervorsteht. Axial ist der Hülsenkopf 51 der Kupplungshülse 12 an die Bundbuchse 27 angelegt. Die Kupplungshülse 12 weist im Bereich des Kopfs einen ringzylindrischen Hülsenring 23 auf, in welchen drei radial gleich verteilt angeordnete Zylinderstifte 22 eingepresst sind. Der Hülsenring 23 und die Zylinderstifte 22 umschließen dabei radial eine stirnseitig offene Kupplungsöffnung 49 der Kupplungshülse 12. Die Kupplungsöffnung 49 ist hier gebildet durch eine durchgehende Stufenbohrung, welche auf Höhe des Hülsenrings 23 einen an den Kupplungszapfen 13 des Zahnrads 6 angepassten ersten Bohrungsdurchmesser und auf Höhe des Schafts 25 einen an einen Wellendurchmesser der flexiblen Antriebswelle 11 angepassten zweiten Bohrungsdurchmesser aufweist. Demzufolge ermöglicht es die Stufenbohrung, den Schaft 25 auf die flexible Antriebswelle 11 aufzusetzen.

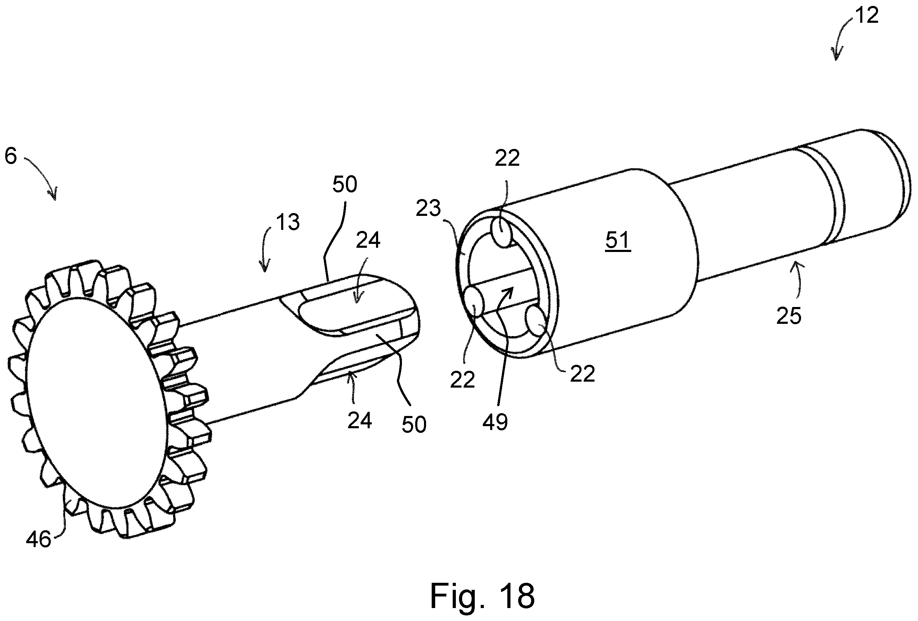

Die Fig. 18 zeigt das Zahnrad 6 und die Kupplungshülse 12 in einer isometrischen Explosionseinzelansicht. Die Kupplungshülse 12 und das Zahnrad 6 bilden eine selbstfindende Drehkupplung aus, welche in der Kupplungsposition des Antriebsstrangs 10 ein Antriebsdrehmoment von dem Antriebsstrang 10 auf das Zahnrad 6 übertragen kann. Das Zahnrad 6 weist hierfür an einem dem Zahnkranz 46 gegenüberliegenden Ende des von dem Zahnrad 6 bereitgestellten Kupplungszapfens 13 eine zu der Anzahl an Zylinderstiften 22 der Kupplungshülse 12 korrespondierende Anzahl an Längsausnehmungen 24 auf. Die Längsausnehmungen 24 sind analog zu den Zylinderstiften 22 radial gleich verteilt angeordnet. In der Kupplungsposition des Antriebsstrangs 10 sind die Längsausnehmungen 24 an die Zylinderstifte 22 der Kupplungshülse 12 angelegt. Die Zylinderstifte 22 stehen hierfür gegenüber dem Hülsenring 23 der Kupplungshülse 12 radial hervor.

Die Selbstfindung der von dem Zahnrad 6 und der Kupplungshülse 12 bereitgestellten Kupplung ist dadurch realisiert, dass die Längsausnehmungen 24 randseitig, das heißt im Bereich ihrer radialen Ränder und im Bereich des dem Zahnkranz 46 zugewandten Randes angeschrägt beziehungsweise mit einem Radius versehen sind. Zudem nehmen die Längsausnehmungen 24 des Zahnrads 6 einen jeweils radial größeren Abschnitt beziehungsweise eine größere radiale Breite ein, als die Zylinderstifte 22 der Kupplungshülse 12. Zwischen den Längsausnehmungen 24 verbleibt jeweils ein schmaler Reststeg 50, welcher für den Fall eines Aufsteckens auf die Zylinderstifte 22 von deren runden Querschnitt abgelenkt wird. Der Reststeg 50 weist hier eine im Wesentlichen mit einem Durchmesser der Zylinderstifte 22 korrespondierende Dicke auf.

Die erfindungsgemäße Kupplungsanordnung ist selbstverständlich nicht auf die bevorzugte Verwendung in einem Fleisch-Trimmer 1 beschränkt und kann Verwendung in verschiedenen, insbesondere mittels eines Antriebsstrangs 10 mit einer flexiblen Antriebswelle 11 rotatorisch angetriebenen Handwerkzeugen finden. Beispielsweise in einer Kreissäge, einem Winkelschleifer, einem Rotationsschleifer, einem schnelldrehenden Multifunktionswerkzeug, einem Dentalbohrer oder dergleichen.

Des Weiteren ist nach einem alternativen Ausführungsbeispiel der erfindungsgemäßen Kupplungsanordnung anstelle der Kupplungsfeder 9 ein anders ausgeführtes Rückstellelement für den Antriebsstrang 10 beziehungsweise für den Bedienhebel 8 vorgesehen. Beispielsweise kann das Rückstellelement als eine zwischen dem Bedienhebel 8 und dem Handgriffgehäuse 4 angeordnete Feder ausgeführt sein, welche den Bedienhebel 8 in der Ausschwenkstellung als Ruhestellung hält, wobei der Antriebsstrang 10 wie gehabt durch die Ausschwenkbewegung des Bedienhebels 8 zwangsweise mitbewegt und in die Auskupplungsposition verbracht ist.

Gleiche Bauteile und Bauteilfunktionen sind durch gleiche Bezugszeichen gekennzeichnet.

## Patentansprüche

1. Kupplungsanordnung für eine Einhand-Sicherheitsbedienabschaltung an einem durch einen Antriebsstrang (10) mit einer flexiblen Antriebswelle (11) rotatorisch antreibbaren Handwerkzeug, die Kupplungsanordnung
- umfassend einen stabförmigen Handgriff (3) mit einem rohrförmigen Handgriffgehäuse (4) und mit einer von dem Handgriffgehäuse (4) jedenfalls mantelseitig umschlossenen zylindrischen Gehäuseausnehmung (5) und einer Einführungsöffnung (44) an einem hinteren Ende des Handgriffgehäuses (4), wobei der Antriebsstrang (10) mit einem Abtriebsende über die Einführungsöffnung (44) in die Gehäuseausnehmung (5) einschiebbar ist,
- umfassend ein Kopfstück (2), das an einem vorderen Ende des Handgriffs (3) lösbar mit demselben verbunden ist,
- umfassend ein in dem Kopfstück (2) aufgenommenes Zahnrad (6) zum Antreiben des Handwerkzeugs,
- weiter umfassend einen an das Handgriffgehäuse (4) angelenkten Bedienhebel (8),
- umfassend ein Rückstellelement für den Antriebsstrang (10) und/oder Bedienhebel (8),
wobei zum Antreiben des Handwerkzeugs der Bedienhebel (8) zu betätigen ist,
wobei durch Betätigung des Bedienhebels (8) direkt das Abtriebsende des Antriebsstrangs (10) axial zum vorderen Ende hin in eine Kupplungsposition verschoben ist, in welcher eine formschlüssige Verbindung zwischen dem Zahnrad (6) und dem Abtriebsende des Antriebsstrangs (10) hergestellt ist, **dadurch gekennzeichnet, dass** durch Betätigung eines zusätzlich am Handgriff (3) vorgesehenen Sicherungselements eine Blockierstellung aufgelöst ist, in welcher das Sicherungselement ein axiales Vorschieben des Antriebsstrangs (10) in die Kupplungsposition und damit das Betätigen des Bedienhebels (8) blockiert, wobei der Antriebsstrang (10) einen radial in Bezug auf die flexible Antriebswelle (11) hervorstehenden Mitnehmer (14) aufweist und dass an dem Handgriff (3) ferner ein Sicherungshebel (7) als Sicherungselement angelenkt ist, wobei der Sicherungshebel (7) in der Blockierstellung in Bezug auf die Gehäuseausnehmung (5) axial vor dem Mitnehmer (14) des Antriebsstrangs (10) angeordnet ist, sodass ein axiales Vorschieben des Antriebsstrangs (10) in die Kupplungsposition blockiert ist.

2. Kupplungsanordnung nach Anspruch 1, **dadurch gekennzeichnet, dass** in der Gehäuseausnehmung (5) eine axial zwischen dem Zahnrad (6) und dem Abtriebsende des Antriebsstrangs (10) aufgenommene Kupplungsfeder (9) als Rückstellelement vorgesehen ist, welche das Abtriebsende des Antriebsstrangs (10) in der Gehäuseausnehmung (5) axial zum hinteren Ende hin in eine rückwärtige Auskupplungsposition als Ruheposition drückt, in welcher die formschlüssige Verbindung zwischen dem Antriebsstrang (10) und dem Zahnrad (6) aufgelöst ist.

3. Kupplungsanordnung nach Anspruch 1 oder 2, **dadurch gekennzeichnet, dass** der Bedienhebel (8) über eine verstellbare Führung (15) in Bezug auf die Gehäuseausnehmung (5) des Handgriffgehäuses (4) radial verschiebbar an dem Handgriff (3) gehalten ist derart, dass der Bedienhebel (8) den Mitnehmer (14) des Antriebsstrangs (10)
- in einer Arretierstellung der Führung (15) axial sichert gegen ein Verschieben des Abtriebsendes des Antriebsstrangs (10) zum hinteren Ende der Gehäuseausnehmung (5) über die Auskupplungsposition hinaus und
- in einer Freilegungsstellung der Führung (15) den Mitnehmer (14) freilegt, sodass der Antriebsstrang (10) über die Einführungsöffnung (44) hinaus herausnehmbar ist aus der Gehäuseausnehmung (5).

4. Kupplungsanordnung nach Anspruch 3, **dadurch gekennzeichnet, dass** die Führung (15) für den Bedienhebel (8) eine Führungsfeder (19) aufweist, welche die Führung (15) in der Arretierstellung als Ruhestellung hält.

5. Kupplungsanordnung nach einem der Ansprüche 1 bis 4, **dadurch gekennzeichnet, dass** die Führung (15) für den Bedienhebel (8) wenigstens ein Langloch (16.1, 16.2) aufweist, wobei durch das Langloch (16.1, 16.2) ein vorzugsweise durch einen Gelenkbolzen und/oder eine Gelenkschraube (17) gebildetes Drehgelenk für den Bedienhebel (8) hindurchgeführt ist.

6. Kupplungsanordnung nach Anspruch 5, **dadurch gekennzeichnet, dass** die Führungsfeder (19) in dem wenigstens einen Langloch (16.1, 16.2) der Führung (15) angeordnet ist.

7. Kupplungsanordnung nach einem der Ansprüche 1 bis 6, **dadurch gekennzeichnet, dass** die formschlüssige Verbindung zwischen dem Zahnrad (6) und dem Abtriebsende des Antriebsstrangs (10) in der Kupplungsposition gebildet ist durch
- eine Kupplungshülse (12) mit einem Hülsenring (23) und mit wenigstens zwei und vorzugsweise drei in dem Hülsenring (23) radial umlaufend gleich verteilt angeordneten Zylinderstiften (22) einerseits und
- einen in die Kupplungshülse (12) formschlüssig eingreifenden Kupplungszapfen (13) mit einer zu den Zylinderstiften (22) der Kupplungshülse (12) korrespondierenden Anzahl an radial umlaufend gleich verteilt angeordneten und axial orientierten Längsausnehmungen (24) andererseits.

8. Kupplungsanordnung nach Anspruch 7, **dadurch gekennzeichnet, dass** der Kupplungszapfen (13) von dem Zahnrad (6) und die Kupplungshülse (12) von dem Antriebsstrang (10) bereitgestellt ist.

9. Kupplungsanordnung nach Anspruch 8, **dadurch gekennzeichnet, dass** die Kupplungshülse (12) als ein Aufsetzstück ausgebildet und mit einem dem Hülsenring (23) axial gegenüberliegenden ringzylindrischen Schaft (25) auf ein abtriebseitiges Ende der flexiblen Antriebswelle (11) aufgesteckt ist.

10. Kupplungsanordnung nach einem der Ansprüche 1 bis 9, **dadurch gekennzeichnet, dass** an dem Handgriffgehäuse (4) ein ringförmiges und den Handgriff (3) mit einem radialen Abstand umlaufendes Anschlagselement (20) gehalten ist, welches einen Anschlag für den Sicherungshebel (7) in der Blockierstellung und/oder für den Bedienhebel (8) in der mit der Auskupplungsposition des Antriebsstrangs (10) korrespondierenden Ausschwenkstellung definiert.

11. Kupplungsanordnung nach einem der Ansprüche 1 bis 10 **dadurch gekennzeichnet, dass** das Handwerkzeug ein Fleisch-Trimmer (1) ist mit einem Kreismesser (41), welches in einer an dem Kopfstück (2) gehaltenen Messerführung (42) rotierbar gelagert ist und welches über einen in das Zahnrad (6) eingreifenden Messerzahnkranz (34) von dem Zahnrad (6) antreibbar ist.

12. Verwendung einer Kupplungsanordnung nach einem der Ansprüche 1 bis 11 in einem Fleisch-Trimmer (1) mit einem Kreismesser (41) als Handwerkzeug.

13. Fleisch-Trimmer (1) umfassend eine Kupplungsanordnung nach einem der Ansprüche 1 bis 11 und umfassend ein Kreismesser (41), welches in einer an dem Kopfstück (2) der Kupplungsanordnung gehaltenen Messerführung (42) rotierbar gelagert ist und welches über einen in das Zahnrad (6) der Kupplungsanordnung eingreifenden Messerzahnkranz (34) von dem Zahnrad (6) antreibbar ist.

## Claims

1. A coupling arrangement for a one-hand safety operation shut-down on a hand tool rotationally drivable by a drive train (10) with a flexible drive shaft (11), the coupling arrangement
- comprising a rod-shaped handle (3) with a tubular handle housing (4) and with a cylindrical housing recess (5) enclosed by the handle housing (4) in any case on the encasing-side and an insertion opening (44) at a rear end of the handle housing (4), wherein the drive train (10) can be pushed with an output end into the housing recess (5) via the insertion opening (44),
- comprising a head piece (2) which is detachably connected to the handle (3) at a front end thereof,
- comprising a gearwheel (6) received in the head piece (2) for driving the hand tool,
- further comprising an operating lever (8) articulated to the handle housing (4),
- comprising a return element for the drive train (10) and/or operating lever (8),
wherein, for driving the hand tool, the operating lever (8) is to be actuated, wherein, by actuation of the operating lever (8), the output end of the drive train (10) is directly displaced axially toward the front end into a coupling position, in which a form-fitting connection is established between the gearwheel (6) and the output end of the drive train (10), **characterized in that**, by actuation of a safety element additionally provided on the handle (3), a blocking state is resolved, in which the safety element blocks an axial advancement of the drive train (10) into the coupling position and thus the actuation of the operating lever (8), wherein the drive train (10) has a driver (14) protruding radially with respect to the flexible drive shaft (11), and **in that** further a safety lever (7) is articulated to the handle (3) as a safety element, wherein the safety lever (7), in the blocking state, is arranged axially in front of the driver (14) of the drive train (10) with respect to the housing recess (5), so that an axial advancement of the drive train (10) into the coupling position is blocked.

2. The coupling arrangement according to claim 1, **characterized in that** a coupling spring (9) received axially between the gearwheel (6) and the output end of the drive train (10) is provided as a return element in the housing recess (5), said coupling spring pressing the output end of the drive train (10) in the housing recess (5) axially toward the rear end into a rearward decoupling position as a rest position, in which the form-fitting connection between the drive train (10) and the gearwheel (6) is resolved.

3. The coupling arrangement according to claim 1 or 2, **characterized in that** the operating lever (8) is held on the handle (3) to be radially displaceable with respect to the housing recess (5) of the handle housing (4) via a shiftable guide (15) in such a way that the operating lever (8) axially secures the driver (14) of the drive train (10)
- in a locking state of the guide (15) against a displacement of the output end of the drive train (10) toward the rear end of the housing recess (5) beyond the decoupling position and
- in an exposing state of the guide (15) exposes the driver (14), so that the drive train (10) is removable from the housing recess (5) beyond the insertion opening (44).

4. The coupling arrangement according to claim 3, **characterized in that** the guide (15) for the operating lever (8) has a guide spring (19) which holds the guide (15) in the locking state as a rest state.

5. The coupling arrangement according to any of claims 1 to 4, **characterized in that** the guide (15) for the operating lever (8) has at least one elongated hole (16.1, 16.2), a pivot joint for the operating lever (8) that is preferably formed by a joint bolt and/or a joint screw (17) being passed through the elongated hole (16.1, 16.2).

6. The coupling arrangement according to claim 5, **characterized in that** the guide spring (19) is arranged in the at least one elongated hole (16.1, 16.2) of the guide (15).

7. The coupling arrangement according to any of claims 1 to 6, **characterized in that** the form-fitting connection between the gearwheel (6) and the output end of the drive train (10) in the coupling position is formed by
- a coupling sleeve (12) with a sleeve ring (23) and with at least two and preferably three cylindrical pins (22) arranged in the sleeve ring (23) in a radially circumferential, uniformly distributed manner, on the one hand, and
- a coupling journal (13) engaging in the coupling sleeve (12) in a form-fitting manner with a number of radially circumferential, uniformly distributed and axially oriented longitudinal recesses (24) which corresponds to the cylindrical pins (22) of the coupling sleeve (12), on the other hand.

8. The coupling arrangement according to claim 7, **characterized in that** the coupling journal (13) is provided by the gearwheel (6) and the coupling sleeve (12) is provided by the drive train (10).

9. The coupling arrangement according to claim 8, **characterized in that** the coupling sleeve (12) is designed as an attachment piece and is put on to an output-side end of the flexible drive shaft (11) with a ring-cylindrical shank (25) which lies axially opposite the sleeve ring (23).

10. The coupling arrangement according to any of claims 1 to 9, **characterized in that** a ring-shaped stop element (20) circumferentially disposed around the handle (3) with a radial spacing is held on the handle housing (4), which stop element defines a stop for the safety lever (7) in the blocking state and/or for the operating lever (8) in the pivot-out state which corresponds to the decoupling position of the drive train (10).

11. The coupling arrangement according to any of claims 1 to 10, **characterized in that** the hand tool is a meat trimmer (1) having a circular knife (41) which is rotatably mounted in a knife guide (42) held on the head piece (2) and which can be driven by the gearwheel (6) via a knife-toothed ring (34) engaging in the gearwheel (6).

12. A use of a coupling arrangement according to any of claims 1 to 11 in a meat trimmer (1) having a circular knife (41) as a hand tool.

13. A meat trimmer (1) comprising a coupling arrangement according to any of claims 1 to 11 and comprising a circular knife (41) which is rotatably mounted in a knife guide (42) held on the head piece (2) of the coupling arrangement and which can be driven by the gearwheel (6) via a knife-toothed ring (34) engaging in the gearwheel (6) of the coupling arrangement.

## Revendications

1. Ensemble d'accouplement pour une coupure de sécurité à une main d'un outil à main pouvant être entraîné en rotation par un organe d'entraînement (10) avec un élément d'entraînement flexible (11), l'ensemble d'accouplement
- comprenant une poignée (3) en forme de barre avec un boîtier tubulaire (4) dans la poignée et avec un évidement cylindrique (5) enveloppé tout au moins sur sa périphérie par le boîtier (4) et un orifice d'insertion (44) dans une extrémité arrière du boîtier (4), une extrémité de sortie de l'organe d'entraînement (10) pouvant être insérée dans l'évidement (5) par l'orifice d'insertion (44),
- comprenant une pièce de tête (2) fixée de façon amovible à une extrémité avant de la poignée (3),
- comprenant une roue dentée (6) logée dans la pièce de tête (2) pour entraîner l'outil à main,
- comprenant en outre une manette de commande (8) articulée sur le boîtier (4) de la poignée,
- comprenant un élément de rappel pour l'organe d'entraînement (10) et/ou la manette de commande (8),
la manette de commande (8) devant être actionnée pour entraîner l'outil à main, l'actionnement de la manette de commande (8) entraînant directement un déplacement de l'extrémité de sortie de l'organe d'entraînement (10) vers une position d'accouplement dans laquelle une liaison par engagement positif est réalisée entre la roue dentée (6) et l'extrémité de sortie de l'organe d'entraînement (10), **caractérisé en ce que** l'actionnement d'un élément de sécurité supplémentaire prévu sur la poignée (3) débloque une position de blocage dans laquelle l'élément de sécurité empêche l'avance axiale de l'organe d'entraînement (10) en position d'accouplement et bloque donc l'actionnement de la manette de commande (8), l'organe d'entraînement (10) présentant un entraîneur (14) en saillie radiale par rapport à l'élément d'entraînement (11), et **en ce qu'**un levier de sécurité (7) est articulé sur la poignée (3) en guise d'élément de sécurité, l'agencement, par rapport à l'évidement (5), du levier de sécurité (7) en position de blocage étant tel qu'il se trouve axialement devant l'entraîneur (14) de l'organe d'entraînement (10) de façon à bloquer l'avance axiale de l'organe d'entraînement (10) en position d'accouplement.

2. Ensemble d'accouplement selon la revendication 1, **caractérisé en ce qu'**un ressort d'accouplement (9) logé dans l'évidement (5) du boîtier axialement entre la roue dentée (6) et l'extrémité de sortie de l'organe d'entraînement (10) est prévu comme élément de rappel, lequel presse l'extrémité de sortie de l'organe d'entraînement (10) dans évidement (5) du boîtier axialement vers l'extrémité arrière dans une position de découplage arrière faisant fonction de position de repos dans laquelle la liaison par engagement positif entre l'organe d'entraînement (10) et la roue dentée (6) est désengagée.

3. Ensemble d'accouplement selon la revendication 1 ou 2, **caractérisé en ce que** la manette de commande (8) est maintenue à la poignée (3) de façon radialement déplaçable par rapport à l'évidement (5) du boîtier (4) au moyen d'un élément de guidage réglable (15) de manière à ce que la manette de commande (8) agisse sur l'entraîneur (14) de l'organe d'entraînement (10) pour
- le bloquer en une position d'arrêt de l'élément de guidage (15) et empêcher un déplacement axial de l'extrémité de sortie de l'organe d'entraînement (10) vers l'extrémité arrière de l'évidement (5) au-delà de la position de découplage, et
- le libérer dans une position de dégagement de l'élément de guidage (15) de façon à pouvoir extraire l'organe d'entraînement (10) de l'évidement (5) par l'orifice d'insertion (44)

4. Ensemble d'accouplement selon la revendication 3, **caractérisé en ce que** l'élément de guidage (15) pour la manette de commande (8) présente un ressort de guidage (19) lequel maintient l'élément de guidage (15) et position d'arrêt faisant fonction de position de repos.

5. Ensemble d'accouplement selon l'une des revendications 1 à 4, **caractérisé en ce que** l'élément de guidage (15) pour la manette de commande (8) présente au moins un trou oblong (16.1, 16.2) par lequel passe une articulation tournante pour la manette de commande (8) formée de préférence par un boulon d'articulation ou une vis d'articulation (17).

6. Ensemble d'accouplement selon la revendication 5, **caractérisé en ce que** le ressort de guidage (19) est agencé dans le (les) trou(s) oblong(s) (16.1, 16.2) de l'élément de guidage (15).

7. Ensemble d'accouplement selon l'une des revendications 1 à 6, **caractérisé en ce que** la liaison par engagement positif entre la roue dentée (6) et l'extrémité de sortie de l'organe d'entraînement (10) est, en position d'accouplement, formée par
- une douille d'accouplement (12) avec une bague (23) et, dans la bague (23), au moins deux et de préférence trois goupilles cylindriques (22) de répartition radiale circonférentielle uniforme d'une part et, d'autre part,
- un pivot d'accouplement (13) s'engageant par complémentarité de forme dans la douille d'accouplement (12) et présentant, en nombre correspondant à celui des goupilles cylindriques (22) de la douille d'accouplement (12), des rainures longitudinales (24) d'orientation axiale et de répartition radiale circonférentielle uniforme.

8. Ensemble d'accouplement selon la revendication 7, **caractérisé en ce que** le pivot d'accouplement (13) est mis à disposition par la roue dentée (6) et la douille d'accouplement (12) par l'organe d'entraînement (10).

9. Ensemble d'accouplement selon la revendication 8, **caractérisé en ce que** la douille d'accouplement (12) est réalisée sous forme de pièce emboîtable qui s'emboîte avec un corps cylindrique annulaire (25) axialement opposé à la bague (23) sur une extrémité de sortie de l'élément d'entraînement flexible (11).

10. Ensemble d'accouplement selon l'une des revendications 1 à 9, **caractérisé en ce que** sur le boîtier (4) est agencé un élément de butée (20) annulaire entourant la poignée (3) avec un certain écart radial et définissant une butée pour le levier de sécurité (7) en position de blocage et/ou pour la manette de commande (8) en position pivotée correspondant à la position de découplage de l'organe d'entraînement (10).

11. Ensemble d'accouplement selon l'une des revendications 1 à 10, **caractérisé en ce que** l'outil à main est une pareuse à viande (1) avec une lame circulaire (41) logée de façon à pouvoir tourner dans un guide (42) porté par la pièce de tête (2) et entraînée par la roue dentée (6) qui s'engrène sur une couronne dentée (34) dont la lame est dotée.

12. Utilisation d'un ensemble d'accouplement selon l'une des revendications 1 à 11 dans une pareuse à viande (1) avec une lame circulaire (41) sous forme d'un outil à main.

13. Pareuse à viande (1) comprenant un ensemble d'accouplement selon l'une des revendications 1 à 11 et comprenant une lame circulaire (41) laquelle est logée de façon à pouvoir tourner dans un guide (42) porté par la pièce de tête (2) de l'ensemble d'accouplement et laquelle est entraînée par la roue dentée (6) de l'ensemble d'accouplement qui s'engrène sur une couronne dentée (34) dont la lame est dotée.
